# DEMANDE DE BREVET EUROPEEN

(11) **EP 0 926 372 A1**
(43) Date de publication de la demande: **30.06.1999**
(21) Numéro de dépôt: 98123532.8
(22) Date de dépôt: 16.12.1998
(51) Int. Cl.: F16D 1/10

(54) **Dispositif d'accouplement notament pour installation de chauffage et/ou climatisation de véhicule automobile**

(30) Priorité: 19.12.1997 FR 9716169
(71) Demandeur: VALEO CLIMATISATION, 78321 La Verrière (FR)
(72) Inventeur: Dubois, Christian, 78610 Le Perray en Yvelines (FR)
(74) Mandataire: Lemaire, Marc

(57) **Abrégé**

L'invention concerne un dispositif pour l'accouplement d'une pièce menante (1) et d'une pièce menée (2) mobiles en rotation, l'une desdites pièces étant une pièce d'accouplement mâle (2) et l'autre desdites pièces étant une pièce d'accouplement femelle (3).

La surface extérieure de la pièce mâle et la surface intérieure de la pièce femelle possèdent des formes complémentaires (14,16), notamment une nervure et une rainure de section triangulaire variable, pour amener la pièce mâle dans une position angulaire prédéterminée par rapport à la pièce femelle lors de son introduction dans cette dernière.

Application aux installations de chauffage et/ou climatisation de véhicules automobiles.

## Description

L'invention concerne un dispositif pour l'accouplement d'une pièce menante et d'une pièce menée mobiles en rotation, notamment pour une installation de chauffage et/ou climatisation de véhicule automobile.

Il est connu dans de telles installations d'entraîner en rotation un organe mobile, par exemple un levier ou un volet, à l'aide d'un moto-réducteur. Ce dernier étant convenablement calé sur l'arbre de l'organe mobile, il est aisé de connaître de façon sûre la position de cet organe par des moyens électroniques.

Il est cependant parfois souhaitable d'adopter des moyens de positionnement de l'organe mobile qui soient plus simples et moins coûteux que le moto-réducteur précité. En particulier, des moyens mécaniques à commande par câble peuvent s'avérer avantageux de ce point de vue.

Les problèmes qui se posent sont alors d'une part celui de l'entraînement en rotation de l'organe mobile à partir de son câble de commande, et d'autre part celui du positionnement angulaire de l'organe mobile sur son axe (en d'autres termes, de son "indexation").

L'entraînement en rotation peut être réalisé à l'aide d'un accouplement formé d'une pièce menante, solidaire en rotation du câble de commande, et d'une pièce menée, solidaire en rotation de l'organe mobile, l'une de ces pièces formant une pièce d'accouplement mâle et l'autre de ces pièces formant une pièce d'accouplement femelle. La solidarisation en rotation entre la pièce menante et la pièce menée peut alors s'effectuer par toute interface simple connue, par exemple du type clavette.

Reste alors le problème du positionnement angulaire de la pièce menée par rapport à la pièce menante lors de la mise en place de la pièce menée. Ce positionnement doit en effet être simple, car le montage est souvent réalisé en aveugle. Il doit également être rapide de sorte qu'il ne doit pas être nécessaire de rechercher la bonne position de la pièce menée. Les interfaces connues du type précité ne satisfont toutefois pas à ces contraintes.

La présente invention vise notamment à pallier cet inconvénient.

A cet effet, l'invention a pour objet un dispositif pour l'accouplement d'une pièce menante et d'une pièce menée mobiles en rotation, notamment pour installation de chauffage et/ou climatisation de véhicule automobile, l'une desdites pièces étant une pièce d'accouplement mâle et l'autre desdites pièces étant une pièce d'accouplement femelle.

Conformément à l'invention, la surface extérieure de la pièce mâle et la surface intérieure de la pièce femelle possèdent des formes complémentaires pour amener la pièce mâle dans une position angulaire prédéterminée par rapport à la pièce femelle lors de son introduction dans cette dernière, et pour permettre l'entraînement en rotation de la pièce menée par la pièce menante après cette introduction.

Dans un tel dispositif, le positionnement angulaire de la pièce mâle s'effectue donc automatiquement du seul fait de son introduction dans la pièce femelle. Le montage peut en conséquence être effectué aisément en aveugle, sans qu'il soit nécessaire de rechercher la position de la pièce mâle.

Dans un mode de réalisation particulier, lesdites formes complémentaires pour amener la pièce mâle dans une position angulaire prédéterminée par rapport à la pièce femelle lors de son introduction dans cette dernière comprennent une nervure longitudinale formée sur l'une desdites surfaces, agencée pour coopérer avec une rainure longitudinale formée sur l'autre desdites surfaces, l'une au moins de ladite nervure et de ladite rainure possédant une section transversale variant progressivement dans le sens longitudinal d'introduction de la pièce mâle dans la pièce femelle.

Plus particulièrement, ladite nervure et ladite rainure peuvent avoir une section transversale sensiblement triangulaire, l'une au moins de ladite nervure et de ladite rainure ayant son angle au sommet variant progressivement dans le sens longitudinal d'introduction de la pièce mâle dans la pièce femelle.

Ladite nervure peut notamment être formée sur la surface intérieure de ladite pièce femelle et ladite rainure formée sur la surface extérieure de ladite pièce mâle, ledit angle au sommet de ladite rainure diminuant progressivement à partir de la zone d'extrémité de ladite pièce mâle.

Ledit angle au sommet peut par exemple diminuer à partir de sensiblement 180°, l'extrémité de ladite pièce mâle formant un méplat d'entraînement agencé pour coopérer avec un méplat correspondant formé sur la surface intérieure de ladite pièce femelle.

Egalement dans un mode de réalisation particulier, ladite pièce femelle possède un cône d'entrée de guidage pour l'introduction de ladite pièce mâle.

Un tel cône d'entrée permet en particulier de faciliter le centrage de la pièce mâle par rapport à la pièce femelle lors de son introduction.

Sous un autre aspect, l'invention concerne également une installation de chauffage et/ou climatisation comportant un tel dispositif d'accouplement.

On décrira maintenant, à titre d'exemple non limitatif, un mode de réalisation particulier de l'invention, en référence aux dessins schématiques annexés dans lesquels:
- la figure 1 est une vue en perspective d'un dispositif selon l'invention avant introduction de la pièce mâle dans la pièce femelle;
- la figure 2 est une vue en coupe axiale de ce dispositif après son montage;
- les figures 3 à 7 sont des sections selon les lignes III-III à VII-VII respectivement de la figure 2; et
- les figures 8 à 10 sont des sections selon la ligne IV-IV de la figure 2 lors de trois phases successives de l'introduction de la pièce mâle dans la pièce femelle.

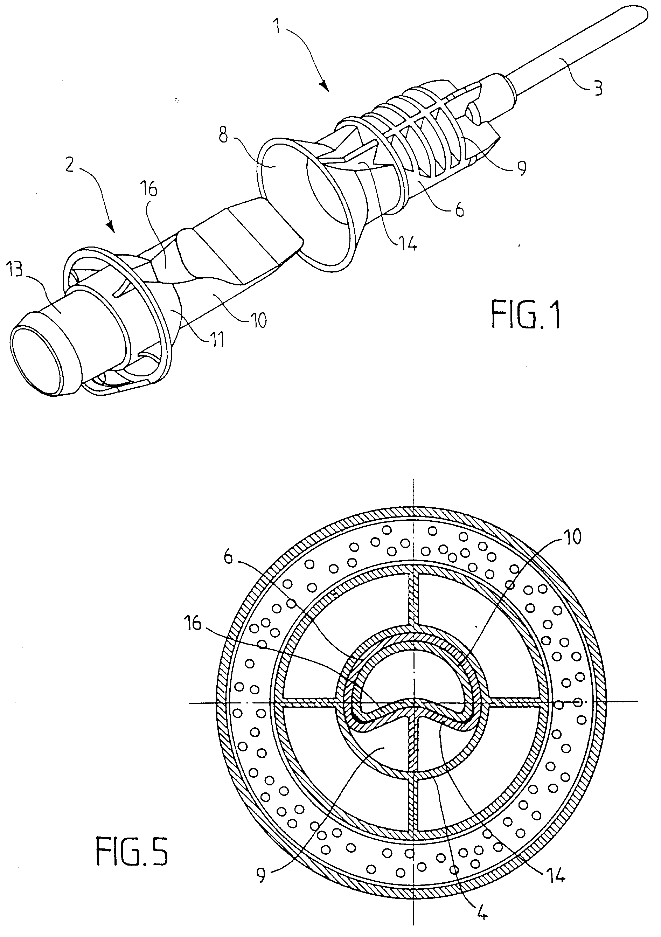

On voit à la figure 1 un accouplement selon l'invention formé d'une pièce menante 1 femelle et d'une pièce menée 2 mâle. La pièce 1 est solidaire d'un câble de commande 3.

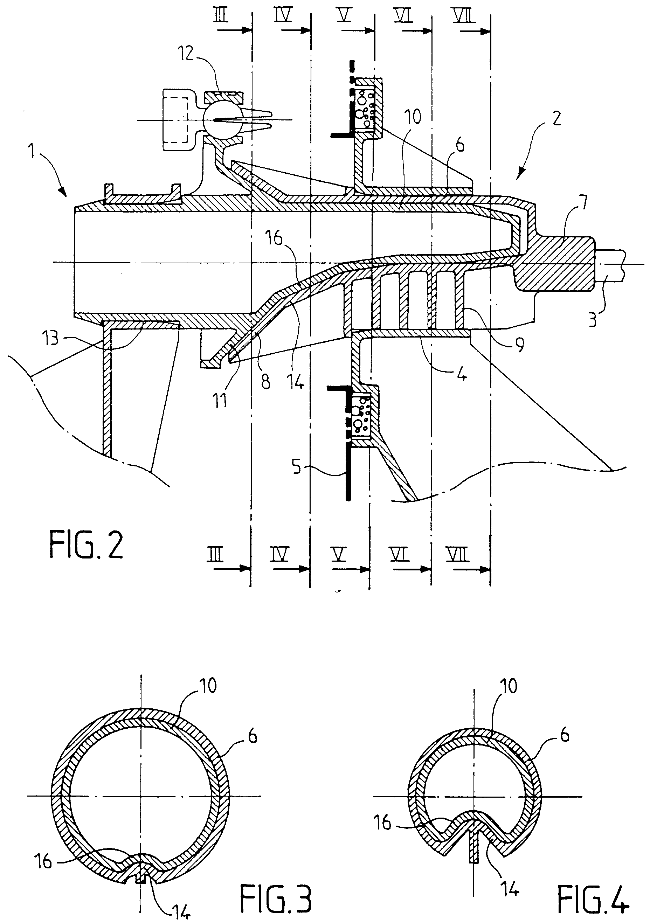

Le montage de cet accouplement consiste à mettre en place la pièce femelle 1 dans un palier de rotation 4 fixé par exemple à la paroi 5 (figure 2) d'un carter d'appareil de chauffage et/ou climatisation de véhicule automobile, puis à introduire la pièce mâle 2 dans la pièce femelle 1 de manière à solidariser ces pièces en rotation. Un organe mobile solidaire de la pièce 2, par exemple un levier ou un volet, peut ainsi avoir sa position angulaire réglée par rotation du câble 3.

La pièce 1 comporte un corps creux 6 dont la forme de la surface intérieure sera décrite ci-après, un nez de sertissage 7 pour l'extrémité du câble 3, et un cône d'entrée 8 de guidage pour la pièce 2. Des nervures transversales 9 reconstituent un volume extérieur cylindrique pour sa rotation dans le palier 4.

La pièce 2 comporte un corps 10, qui se trouve ici être également creux, muni à l'opposé de son extrémité d'un cône de butée 11 complémentaire du cône d'entrée 8. A l'opposé du corps 10 par rapport au cône 11, donc à l'extérieur de la pièce 1, la pièce 2 comporte un levier 12, par exemple pour sa liaison à tout élément souhaitable, et une surface de montage 13 pour une pièce telle qu'un volet.

La surface intérieure du corps 6 de la pièce femelle 1 forme, à partir du bord du cône d'entrée 8, une nervure 14 de section transversale triangulaire. Lorsque l'on se dirige vers l'intérieur du corps 8, cette section d'une part a sa surface qui augmente, et d'autre part a son angle au sommet qui augmente. Vers le fond du corps 6, la nervure 14 s'estompe, son angle au sommet tendant vers 180°. Le fond du corps 6 forme finalement un méplat 15 dans le prolongement de la nervure 14.

On observera en outre que la moitié supérieure (sur les figures 2 à 7) du corps 6, dans la zone comprise entre le col du cône d'entrée 8 et le fond du corps, est sensiblement semi-cylindrique.

La surface extérieure du corps 10 de la pièce 2 possède une forme complémentaire de la surface intérieure du corps 6 qui vient d'être décrite.

Cette surface forme donc une rainure 16. Cette rainure 16 a également une section transversale triangulaire dont la surface augmente ainsi que l'angle au sommet en direction de l'extrémité du corps 10. Cette rainure finit par s'estomper pour se terminer par un méplat 17.

En outre, la moitié supérieure (sur les figures 2 à 7) du corps 10, dans la zone comprise entre le cône 11 et l'extrémité du corps, est sensiblement semi-cylindrique, de rayon sensiblement égal à celui de la moitié supérieure du corps 6.

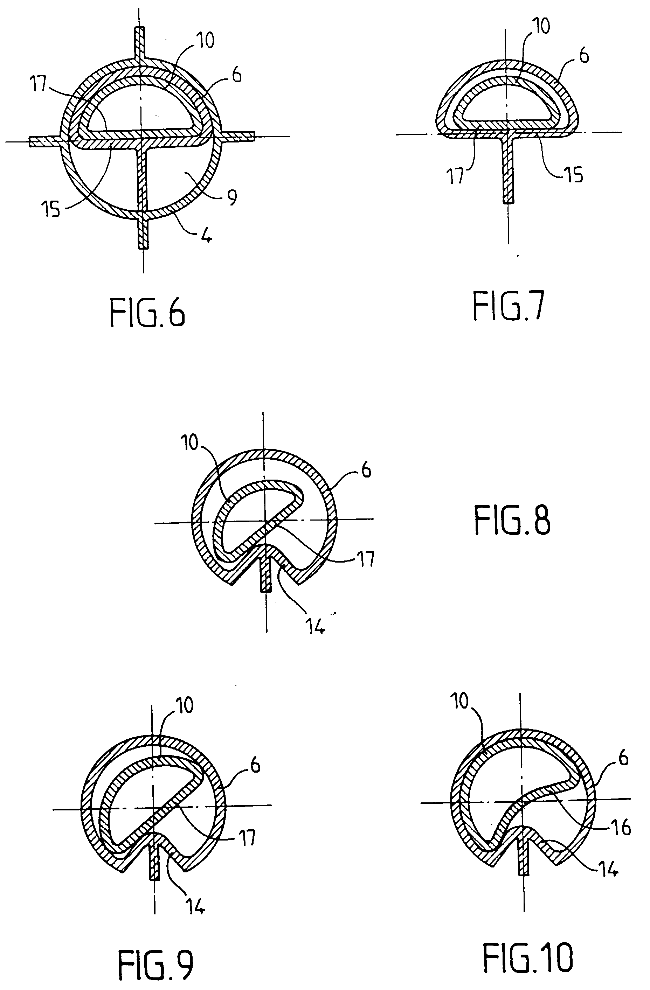

Les figures 8 à 10 illustrent la manière dont la surface intérieure du corps 6 coopère avec la surface extérieure du corps 10 pour centrer puis positionner angulairement le corps 10 dans le corps 6 lors de l'introduction de la pièce 2 dans la pièce 1.

Un précentrage est tout d'abord réalisé lors de la pénétration de la pièce mâle 2 dans le cône d'entrée 8. La situation est celle de la figure 8.

Le centrage est poursuivi tandis que l'extrémité du corps 10 s'engage dans la partie semi-cylindrique du corps 6, comme montré à la figure 9. Il est achevé lorsque la partie semi-cylindrique du corps 10 s'engage dans la partie semi-cylindrique du corps 6, comme montré à la figure 10. En effet, dans cette position, le corps 10 ne possède plus de degré de liberté transversale dans le corps 6.

Il demeure toutefois un degré de liberté de rotation du fait que, dans la zone de contact, l'angle au sommet de la rainure 16 est supérieur à celui de la nervure 14.

On voit sur la figure 10 que, lorsque l'engagement de la pièce 2 dans la pièce 1 se poursuit, une aile de la nervure 14 repousse l'arête homologue de la rainure 16. Le corps 10 est ainsi amené à pivoter dans le corps 6 jusqu'au positionnement angulaire convenable de la pièce 2 par rapport à la pièce 1, représenté à la figure 4.

Ce positionnement angulaire s'est donc effectué automatiquement, par coopération des surfaces complémentaires des pièces 1 et 2.

Après cette mise en place, l'entraînement de la pièce 2 par la pièce 1 est essentiellement réalisé par coopération des méplats 15 et 17.

Bien entendu, l'invention n'est pas limitée au mode de réalisation décrit précédemment et s'étend à d'autres variantes. En particulier, la structure de la surface externe de la pièce mâle et celle de la surface intérieure de la pièce femelle sont susceptibles de nombreuses variantes.

## Revendications

1. Dispositif pour l'accouplement d'une pièce menante (1) et d'une pièce menée (2) mobiles en rotation, notamment pour installation de chauffage et/ou climatisation de véhicule automobile, l'une desdites pièces étant une pièce d'accouple ment mâle (2) et l'autre desdites pièces étant une pièce d'accouplement femelle (3),
caractérisé en ce que la surface extérieure de la pièce mâle et la surface intérieure de la pièce femelle possèdent des formes complémentaires (14,16) pour amener la pièce mâle dans une position angulaire prédéterminée par rapport à la pièce femelle lors de son introduction dans cette dernière, et pour permettre l'entraînement en rotation de la pièce menée par la pièce menante après cette introduction.

2. Dispositif selon la revendication 1, dans lequel lesdites formes complémentaires pour amener la pièce mâle dans une position angulaire prédéterminée par rapport à la pièce femelle lors de son introduction dans cette dernière comprennent une nervure longitudinale (14) formée sur l'une desdites surfaces, agencée pour coopérer avec une rainure longitudinale (16) formée sur l'autre desdites surfaces, l'une au moins de ladite nervure et de ladite rainure possédant une section transversale variant progressivement dans le sens longitudinal d'introduction de la pièce mâle dans la pièce femelle.

3. Dispositif selon la revendications 2, dans lequel ladite nervure (4) et ladite rainure (3) ont une section transversale sensiblement triangulaire, l'une au moins de ladite nervure et de ladite rainure ayant son angle au sommet variant progressivement dans le sens longitudinal d'introduction de la pièce mâle (2) dans la pièce femelle (3).

4. Dispositif selon la revendication 3, dans lequel ladite nervure (14) est formée sur la surface intérieure de ladite pièce femelle (3) et ladite rainure (16) est formée sur la surface extérieure de ladite pièce mâle (2), ledit angle au sommet de ladite rainure diminuant progressivement à partir de la zone d'extrémité de ladite pièce mâle.

5. Dispositif' selon l'une quelconque des revendications 3 ou 4, dans lequel ledit angle au sommet diminue à partir de sensiblement 180°, l'extrémité de ladite pièce mâle formant un méplat d'entraînement (17) agencé pour coopérer avec un méplat correspondant (15) formé sur la surface intérieure de ladite pièce femelle.

6. Dispositif selon l'une quelconque des revendications 1 à 5, dans lequel ladite pièce femelle possède un cône d'entrée de guidage (8) pour l'introduction de ladite pièce mâle.

7. Installation de chauffage et/ou climatisation comportant un dispositif d'accouplement selon l'une des revendications 1 à 6.
